# EUROPEAN PATENT SPECIFICATION

(11) **EP 1 082 675 B1**
(45) Date of publication and mention of the grant of the patent: **04.09.2002**
(21) Application number: 99955349.8
(22) Date of filing: 03.06.1999
(51) Int. Cl.: G06F 17/30

(54) **METHOD AND APPARATUS FOR ACCESSING WEB SITES VIA THE INTERNET**
VERFAHREN UND GERÄT ZUM ZUGREIFEN ZU WEB-SITES VIA INTERNET
PROCEDE ET APPAREIL D'ACCES A DES SITES WEB VIA L'INTERNET

(30) Priority: 03.06.1998 GB 9811941; 09.07.1998 GB 9814947; 14.04.1999 GB 9908554
(43) Date of publication of application: 14.03.2001
(73) Proprietor: Kaplan, Robert, London NW11 6AM (GB)
(72) Inventor: Kaplan, Robert, London NW11 6AM (GB)
(86) International application number: GB9901766
(87) International publication number: WO99063457

(56) References cited:
- WO-A-98/06055
- WO-A-98/20411
- US-A- 5 281 799
- "DISTRIBUTING UNIFORM RESOURCE LOCATORS AS BAR CODE IMAGES" IBM TECHNICAL DISCLOSURE BULLETIN, vol. 39, no. 1, 1 January 1996 (1996-01-01), page 167 XP000556360 ISSN: 0018-8689

## Description

The present invention relates to an information transfer system. In particular the present invention relates to novel methods and apparatus for facilitating the transfer of information from Internet web sites to other computer terminals.

In recent times the amount of information available and the number of available sources of information has increased dramatically. A problem with the increasing volume of information and sources of information is that it is now difficult for information providers to direct individuals to obtain relevant information from them.

In particular, one source of information which has grown dramatically in recent years are web sites on the Internet. Although to a certain extent search engine programs automate the process of searching for web sites, the success of a search engine program is dependent upon the key words used for a search. If the key words are insufficiently specific too many candidate web sites will be returned and the number of pages to be considered will not be reduced to manageable proportions. If the search criteria are overly specific, sites of interest may not be found.

It is of course possible for web site address data to appear on a printed document such as described in WO9820411 A (Neomedia Technologies Inc) 14/5/1998, which relates to a machine readable printed document used for clients to access server locations on the Internet by scanning a printed document which has a bar code printed on it, the bar code contains an executable command and a launch command instruction included in the bar code data to instruct the connected computer to launch the required program needed to facilitate the requirements of the data on the bar code. In another version of using a printed document containing server address data WO 98 06055 A (Rapaport Jeffrey Alan; Rapaport Seymour Alvin (US)) 12/2/1998, relates to a way to access server locations using bar codes that contain URL's that are scanned by a bar code reader to a pre opened direct scan software program or menu scan software program in a connected computer that takes over and transfers the data to a browser. Both methods in some respects are similar in that they both employ bar codes, wherein one contains instruction data placed on the bar code the other uses a pre opened software program in a connected computer to receive the bar code data used to activate any required programs to facilitate using the information on the bar codes, they both also use bar codes to promote a company's web site, by example, an advert for a company will often include reference to that company's web site. However, this can be unsatisfactory from the company's viewpoint as a user is required to type in the web address manually in order to view the web site. The necessity of manual input decreases the chance that anyone viewing the advert will actually visit the web site and also gives rise to the possibility that the address may be incorrectly entered, and if any character in the address is entered incorrectly, the web site will not be located. US 5 281 799 A (McIntire Harley J Et AL) 25/1/1994, relates to an system for placing data onto a data carrier that itself is placed within a cavity on a document for printing, encoding and distributing as a flat document and also to enable stacking documents with a data carrier attached by glue. This process relates to the printing and encoding of data cards with both magnetic stripe and also bar codes for distribution to selected groups and presents a unique way for processing and assemble of data carrier cards that may be used by the discussed prior art and indeed by the present invention when recording data onto a data carrier.

A further problem arising with the growth of the Internet is that at times of peak use communication can become very slow. The use of direct connection to server locations has provided a solution to the congestion on the Internet. However, this has been achieved only by requiring a user to enter specific data in order to connect directly with a server rather than using the Internet connection generated by a local server which leaves room for error when entering the required data manually. There is also room for error when entering email addresses for sending email.

Additionally there are difficulties at present for restricting access to web sites to appropriate individuals. There are also problems with how to charge for the downloading of individual data from a web site or the on going viewing of a web site which does not involve the exchange of credit card numbers which may be open to misuse.

The present invention aims to provide an alternative information transfer system for facilitating the retrieval of information from predetermined server locations via the Internet.

In accordance with the present invention there is provided data on a data carrier and a reader that contains within itself the means to read and interpret the data on a data carrier thereby enabling the determination and selection of the communication link program to activate by the reader, to transfer the data into, to enable forming a communication link to a server location, as recorded on the data carrier and read by the reader. By having a reader that contains the means in itself to activate a communication link program for placing data therein to enable forming a communication link, reduces the need to have a monitoring program resident in a computer from start up that is always on call waiting for the transfer of data to send an instruction for opening a required program to enable utilising the transferred data, or having to open a program in a connected computer prior to reading data from a data carrier. The added benefits of having a reader that contains a CPU and ROM are that the reader could be built into a communication device itself or a device containing a communication link program, such as a mobile communication device able to transfer and receive server location data that may be for a web site or for an email location or for a direct connection. One other benefit would be the reduced amount of data required on the data carrier by not requiring any instruction data on the data carrier.

In a further aspect the present invention provides a information retrieval system by which individuals are directed towards relevant information through the distribution of documents having address data recorded thereon. The document or data carrier could be for example an advertising leaflet or magazine or other periodical. When individuals are in possession of such data carriers they can obtain relevant information by causing the address data recorded on a data carrier to be read by a reader which causes a browser program to access a corresponding server location. The present invention is only concerned with the use of the data carrier itself, and the mass distribution and reading of the data on the data carrier by the reader, not the actual production of placing of data on a data carrier.

In accordance with another aspect the present invention seeks to provide an alternative method and apparatus for enabling a user to pay for viewing or downloading data by use of an account card that enables the deduction of credit from the individual account by updating the account at the account server location of the issuer of the data carrier, this deduction of credit would be according to online usage. An added benefit of having a reader that downloads data directly through a communication program including any further data read from a data carrier affords a certain amount of security, in that the data would not be open to abuse by hackers or keyboard sniffers as the data does not reside for any time in the computer nor is it entered by keyboard. The present invention also aim to provide means by which the access to data on a web site can be restricted to appropriate individuals only, by use of a data carrier with restricted use data encoded on it.

Embodiments of the present invention will be described by way of example with reference to the accompanying drawings, in which:
Figure 1 is a block diagram for illustrating an information transfer system in accordance with the present invention;
Figure 2 is a schematic diagram illustrating a leaflet having a swipe card attached;
Figure 3 is a schematic diagram of a swipe card;
Figure 4 is a schematic diagram of an addressing system in accordance with an embodiment of the present invention;
Figure 5 is a block diagram of the card reader of Figure 1;
Figure 6 is a flow diagram of the control program of the reading device of Figure 4;
Figure 7 is a block diagram of the memory of the computer of Figure 4;
Figures 8A and 8B are flow diagrams for explaining the flow of control of the computer programs stored in the computer of Figure 4;
Figure 9 is a schematic diagram of a computer network;
Figure 10 is a flow diagram of the flow of control of apparatus in accordance with a second embodiment of the present invention;
Figure 11 is a flow diagram of the flow of control of apparatus in accordance with a third embodiment of the present invention;
Figure 12 is a schematic diagram illustrating a document having a detachable swipe card; and
Figure 13 is a schematic diagram of a magazine with an associated swipe card.

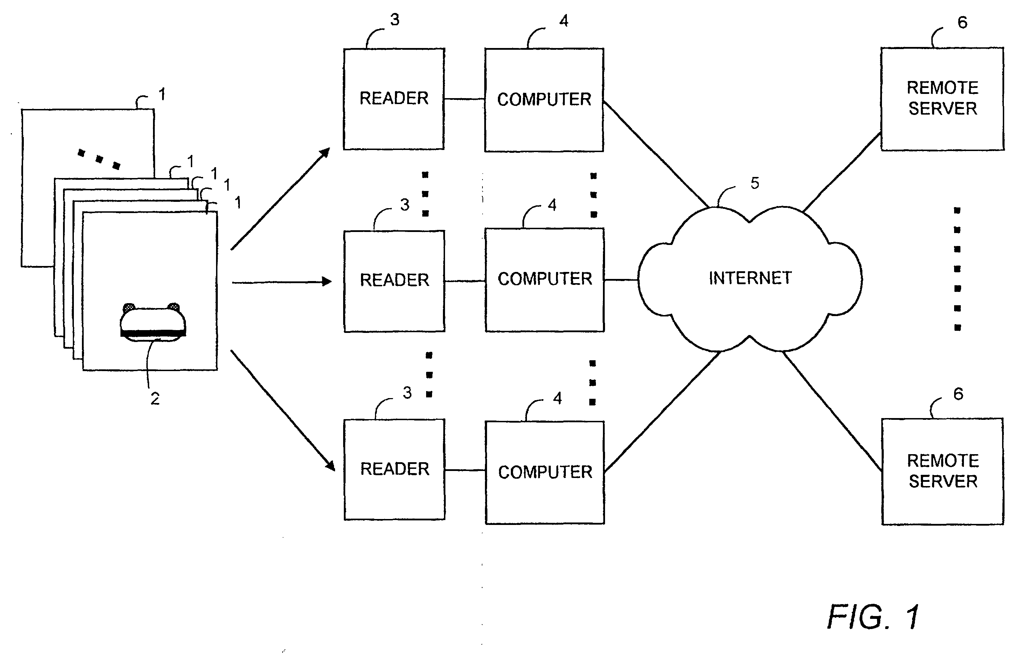

Figure 1 is a block diagram of a system for facilitating the transfer of information from the web sites of advertisers such as companies or other organisations to others such as individuals who may be interested in products and services offered.

The apparatus comprises a number of components which cooperate to effect the transfer of information, namely a number of advertising leaflets 1 each having attached thereto a swipe card having address data recorded thereon and a number of user stations each comprising a card reader 3 and a computer 4 all having facilities for connecting to the Internet 5, and a number of remote servers 6 also connected to the Internet and having stored therein web sites which may be of interest to the individuals.

In use of the invention, an advertiser wishing individuals to access his web site distributes advertising leaflets 1 having cards 2 thereon to individuals in a conventional manner, such as by being distributed by post or by being handed out inside a shop. When a user is in possession of an advertising leaflet 1 having a swipe card 2 attached the user detaches the swipe card 2 from the leaflet 1 and passes the swipe card 2 through the card reader 3. The address data stored on the swipe card 2 is then read by the reader and transferred to a browser program stored within the computer 4. This causes the computer 4 to download web site information from the server 6 corresponding to the address data read from the swipe card 2. In this way by distributing advertising leaflets having attached thereto swipe cards 2 to a plurality of users each having a computer 4 and a card reader 3 an advertiser can direct users to relevant information stored within a remote server 6.

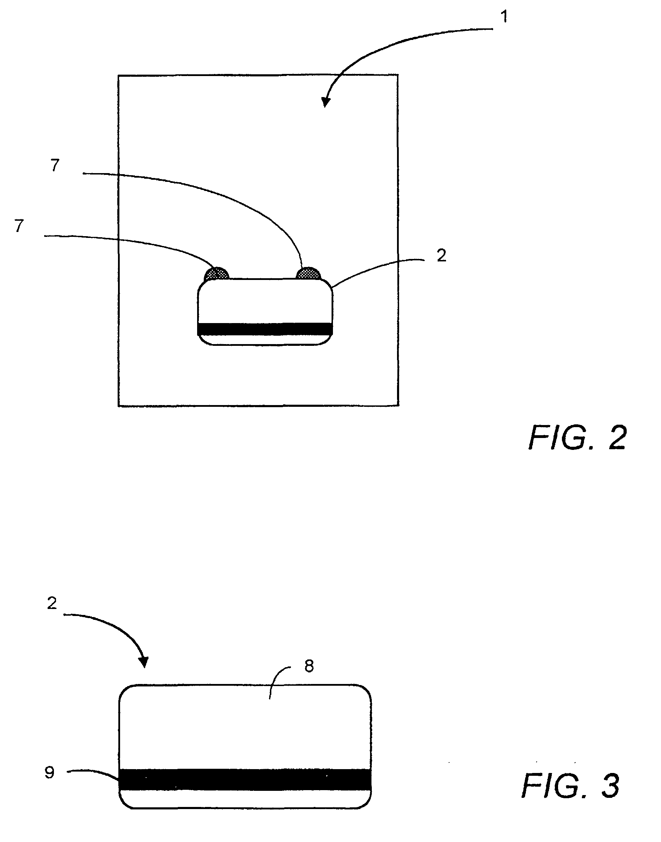

Figure 2 is a schematic diagram illustrating one of the leaflets 1 having a swipe card 2 attached thereto. The leaflet 1 comprises a conventional advertising leaflet being a paper substrate on which is printed advertising matter. The swipe card 2 attached the leaflet 1 is attached to the paper substrate of the advertising leaflet by means of glue 7. The glue 7 is such as to permit a user to remove the swipe card 2 from the advertising leaflet 1 without damaging the card 2.

Figure 3 is a schematic diagram of a swipe card 2 in accordance with this embodiment of the present invention, which has been separated from a leaflet 1. The swipe card 2 comprises a substrate 8 such as a plastic, paper or card substrate supporting thereon a magnetic strip 9. Recorded on the magnetic strip 9 is machine readable data for recording the web address or Universal Resource Locator (URL) of a web site stored in a remote server 6 from which information is to be obtained.

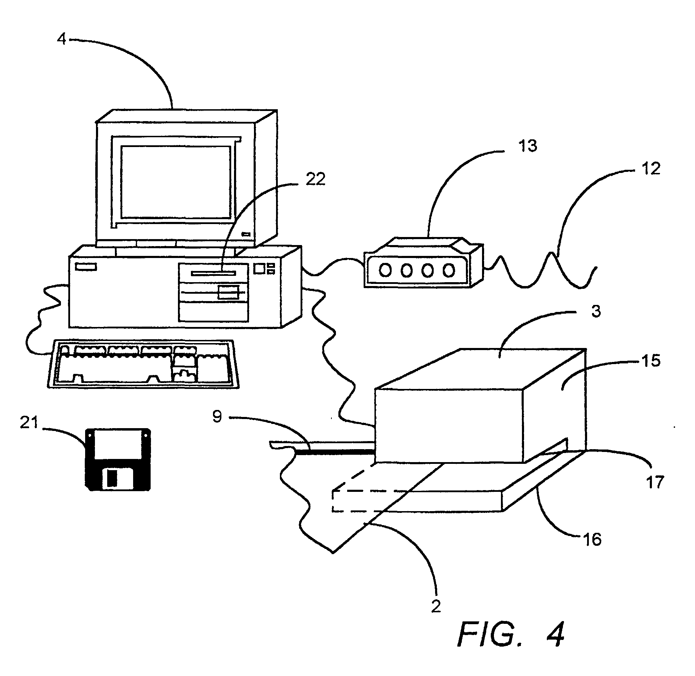

Figure 4 shows in detail a user station of Figure 1 for obtaining data from a remote server comprising a computer 4 and a card reader 3. The computer 4 of the user station is connected to the internet (not shown in Figure 4) via a communications network 12 such as a telephone network and a modem 13. The computer 4 is also connected to the swipe card reader 3. The swipe card reader 3 comprises a first housing portion 15 and a second housing portion 16 connected to each other so as to define a slot 17 through which a swipe card 18 may be passed.

In using the present invention when a swipe card 2 having a magnetic tape 9 on which address data representative of a way of forming a communications link to a server recorded thereon is passed through the slot 17 of the card reader 3 the card reader 3 is arranged to read the address data from the magnetic tape 9. The address data is then transferred to the computer 2 which causes a browser program to generate a communications link based on the address data as is described in detail below.

The processing of data passed from the swipe card reader 3 to the computer 4 is coordinated by a device driver program stored in the memory of the computer 4. The device driver may be loaded into the memory of the computer 2 either via a disc 21 and a disc drive 22 or alternatively may be downloaded from the Internet via the communications network 12 and the modem 13. Alternatively the device driver program may be pre-stored in the memory of the computer 4.

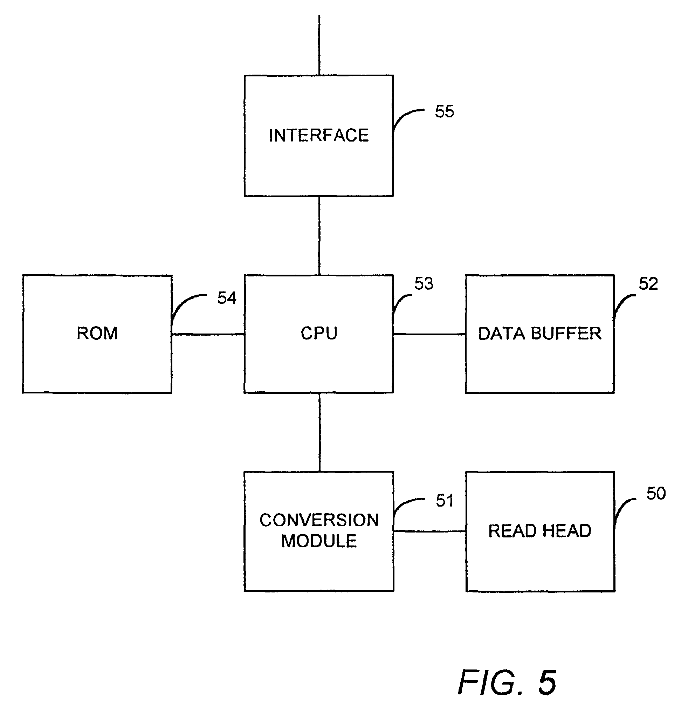

Figure 5 is a block diagram of the card reader 3 shown in Figure 4. The card reader 3 comprises a read head 50 which is arranged to read data from a magnetic strip 9 of a card 2 passed through the slot 17 of the reader 3. The read head 50 is connected to a conversion module 51 which is arranged to convert the signal generated by the read head 50 into a digital signal that can be stored in a data buffer 52 which is connected to the read head 50 via the conversion module 51 and a central processing unit (CPU) 53. The CPU 53 is also connected to a read only memory (ROM) 54 and an interface 55. The CPU 53 is arranged to process signals received from the conversion module 50, the data buffer 52 and the interface 55 in accordance with a program stored in the read only memory 54.

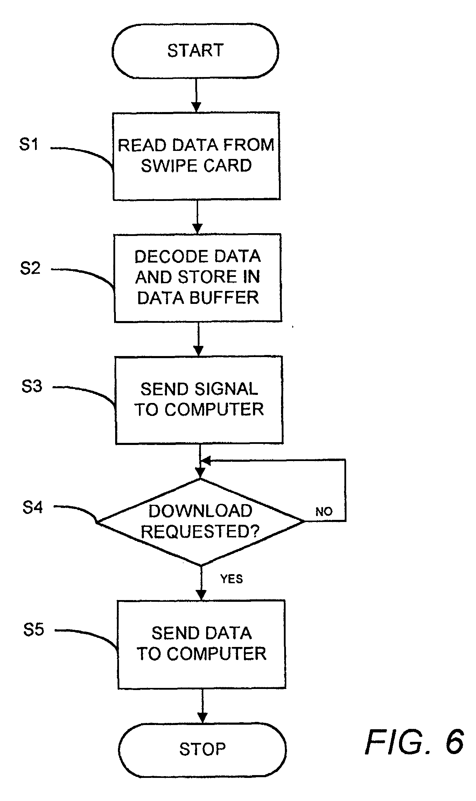

Figure 6 is a flow diagram illustrating the use of the card reader 3 of Figure 4.

When a swipe card 2 having address data such as a web site address or a Universal Resource Locator (URL) recorded on a magnetic strip 9, is passed through the slot 17 of the card reader 3, the data recorded on a magnetic strip 9 present on the swipe card 2 is read (s1) by the read head 50. The read head 50 then generates a signal which is passed to the conversion module 51.

The conversion module 51 decodes (s2) the signal generated by the read head 50 into a form which is suitable for storage in the data buffer 52. The decoded signal is transferred via the CPU 53 and stored in the data buffer 52.

When the CPU 53 detects that data has been received from the conversion module 51 and stored in the data buffer 52, this causes the CPU 53 to send (s3) a signal to the computer 4 via the interface 55 to inform the computer that data has been read by the read head 50 and is currently stored in the data buffer 52.

The CPU 53 then in accordance with the program stored in the ROM 54 waits (s4) to receive a signal back from the computer requesting that the data stored in the data buffer 52 be transmitted to the computer 4 via the interface 55.

When a signal requesting that the data stored in the data buffer 52 be transferred to the computer 4 is received CPU 53 then causes the data to be transmitted (s5) to the computer 4 via the interface 55. Thus in this way the card reader 3 enables data read from a magnetic strip 19 on a swipe card 18 can be transferred to the memory of the computer 4.

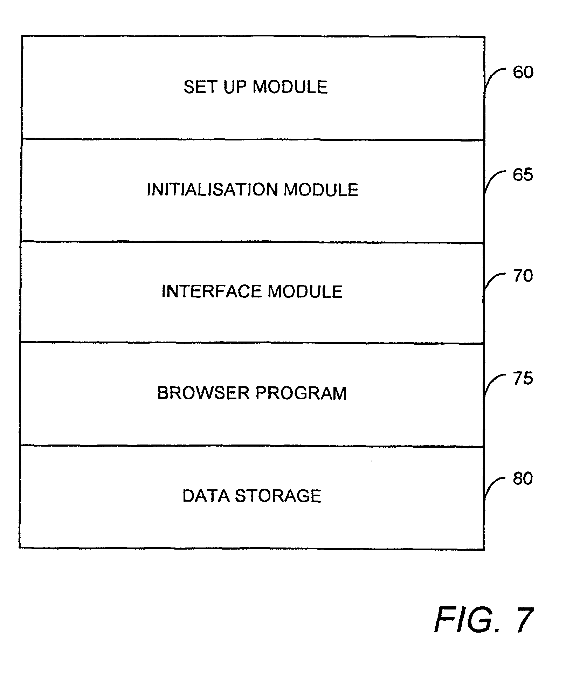

Figure 7 is a block diagram of the memory of the computer 4 of Figure 2. Stored in the memory of the computer 4 are a setup module 60, an initialisation module 65, an interface module 70 and a browser program 75. A portion 80 of the memory of the computer 4 is also available for storage of variables.

The setup module 60 comprises a program enabling a user to input into the computer 4 data indicative of where and which type of browser program 75 is stored in memory. The initialisation module 65 comprises a program for starting the interface module 70 and the browser program 75 automatically when a signal is received from the card reader 3. The interface module comprises a program which enables data received from the card reader 3 to be used in the browser program 75. The browser program 75 is a standard browser program known in the art for forming communication links with remote servers and downloading data, such as Netscape or Internet Explorer.

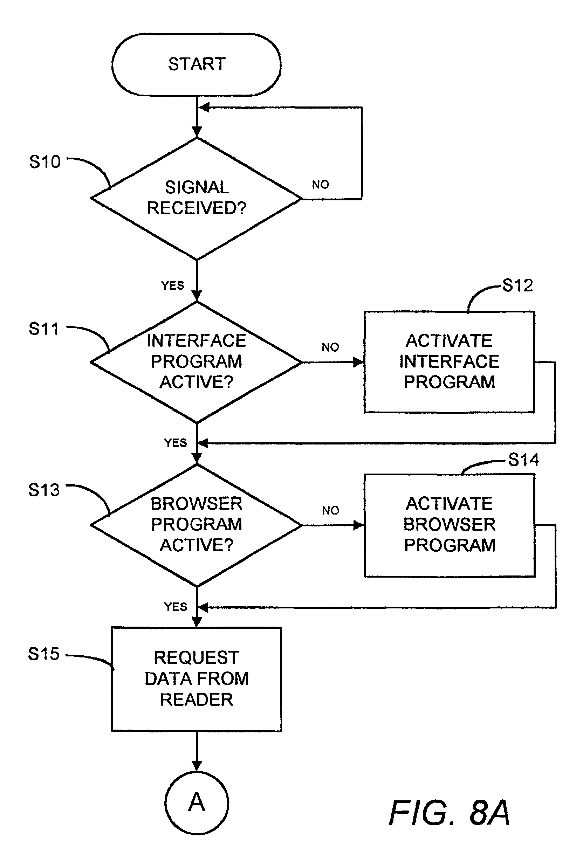

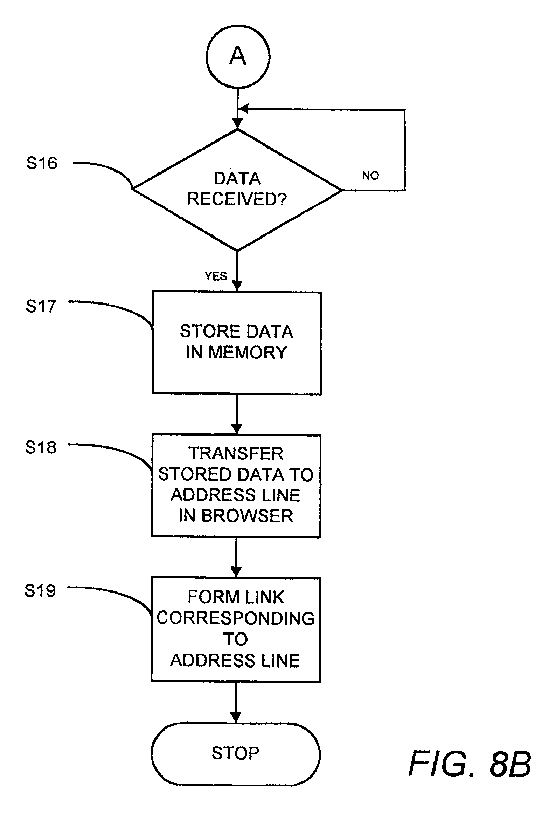

Figures 8A and 8B are a flow diagram for describing the flow control of the programs stored in the memory of the computer 4. When the computer 4 is initially switched on, the initialisation module 65 stored in memory is activated. This monitors (s10) the interface 55 of the card reader 3 to detect whether a signal has been received indicating that the data buffer 52 of the card reader 3 contains data.

When the initialisation module 65 receives a signal from the card reader 3 this causes the initialisation module to determine (s11) whether the interface module 70 has been activated. If the interface module 70 has not yet been activated the initialisation module 65 activates (s12) the interface module 70.

The initialisation module 65 then determines (s13) whether the browser program 75 has yet been activated. If the initialisation module 65 determines that browser program 75 has not yet been activated, the initialisation module 65 activates the browser program 75 based upon the data previously input using the set up module 60 defining which browser program is available for activation and where the browser program 75 is stored. When the browser program 75 has been activated the initialisation module 65, the initialisation module 70 then passes control to the interface module 70.

The interface module 70 then sends a request (s15) to the card reader 3 to request that data stored in the data buffer 52 of the card reader 3 be downloaded into the memory of the computer 4 via the interface 55 of the card reader 3. The interface module 70 then waits (s16) until data previously stored in the data buffer 52 of the card reader 3 is received from the card reader 3. When the data previously stored in the data buffer 52 is received the data is then stored (s17) in the data storage portion 80 of the memory of the computer 4. The interface module 70 then activates the address line of the browser program 75 and enters the data stored in the data storage portion of the memory 80 into the address line of the browser program 75 and then passes control to the browser program 75.

When control is passed to the browser program 75, the browser program then forms a link corresponding to the address data in the activated address line which now contains data which previously had been read by the card reader 3. The browser program 75 then downloads a web site corresponding to the address, to enable a user to view the web site in the usual manner.

In the above description the operation of the card reader 3 and computer 4 of the present invention has been described in terms of a card reader 3 which reads and stores data from a swipe card and a program within the memory of the computer 4 which coordinates and controls the transfer of data from the data buffer 52 of the card reader 3 to the memory of the computer for use within a browser program 75. It will however be appreciated that the coordination of the transfer of data could be performed by the CPU 53 in accordance with a program stored within the ROM 54 within the card reader 3 itself. In such an embodiment, when data has been decoded and read by the card reader 3, the card reader 3 would cause an instruction to be sent to the computer 4 to activate the browser program 75 stored in memory of the computer 4. The CPU 53 would then cause data stored within the data buffer 52 to be transferred to the computer 4 and stored in the address line of the activated browser program 75 which is instructed to form a link corresponding to the address line.

By providing a card reader 3 which itself contains the means for coordinating the transfer of data to a browser 75 the need for an initialisation module 65 and interface module 70 within the computer 4 is thereby avoided. The CPU 53 and ROM 54 provide means by which an initialisation module 65 which is constantly active can be provided and hence reduces the overhead required for running such a program within the computer 4.

Prior to describing a second embodiment of the present invention, a computer network will be described in which a computer can be connected to a number of servers in a number of different ways.

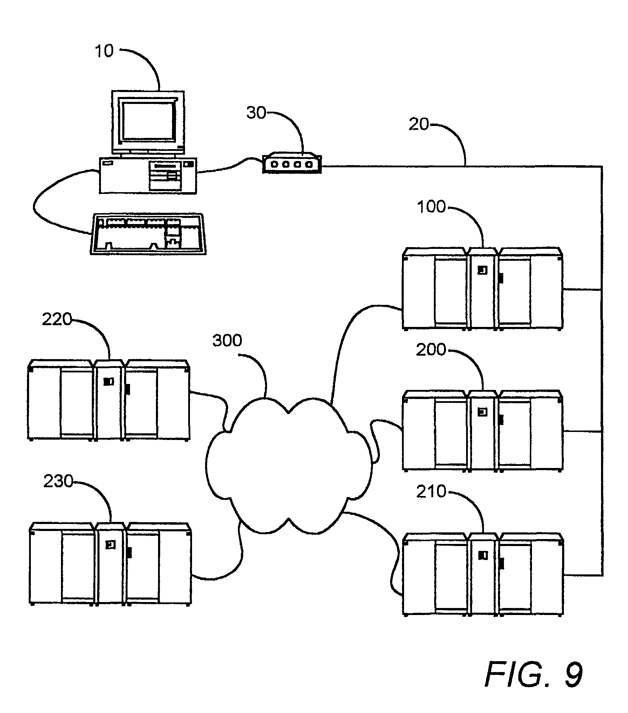

Figure 9 is a schematic diagram of a computer network. The computer network comprises a computer 10 which is connected to a communications network 20 via a modem 30. The communications network 20 may comprise a telephone network or a network of ISDN lines or the like.

The communications network 20 connects the modem 30 directly to a number of servers 100,200,210. Each of the servers 100,200,210 connected directly by the communications network 20 is also connected to one another via the internet 300 to one another and also to a number of servers 220,230 via the internet 300, which are not directly connected to the modem via the communications network 20.

When a user of the computer 10 wishes to download information from one of the servers 100,200,210 for which a direct communications link exists the user can connect to the remote server via the modem 30 and the communications network 20 directly. This is achieved by a user causing the modem 30 to dial a number corresponding to the direct communications link to the server 100,200,210 on the communications network 20. Alternatively, the user can connect the computer 10 to one of the servers 100,200,210 via the modem 30 and the communications network 20 and then be indirectly connected to any of the other servers 100,200,230 via the Internet 300. This is achieved by a user instructing the modem 30 to dial a number corresponding to the communications link to one of the servers for which a direct communications link exists 100,200,210 on the communications network 20 and then making use of the Internet 300 to transfer information between that server 100,200,210 and any of the other servers 200-230.

In this way if a direct communications link to a server exists and a user is aware of that direct communications link, the user can obtain information from that server without needing to use the Internet 300. However, if no direct communications link exists or a user is not aware of a direct communications link to a server the user can still obtain information from the servers 100,200,230 indirectly via a server 100 for which a direct connection is known and the internet 300.

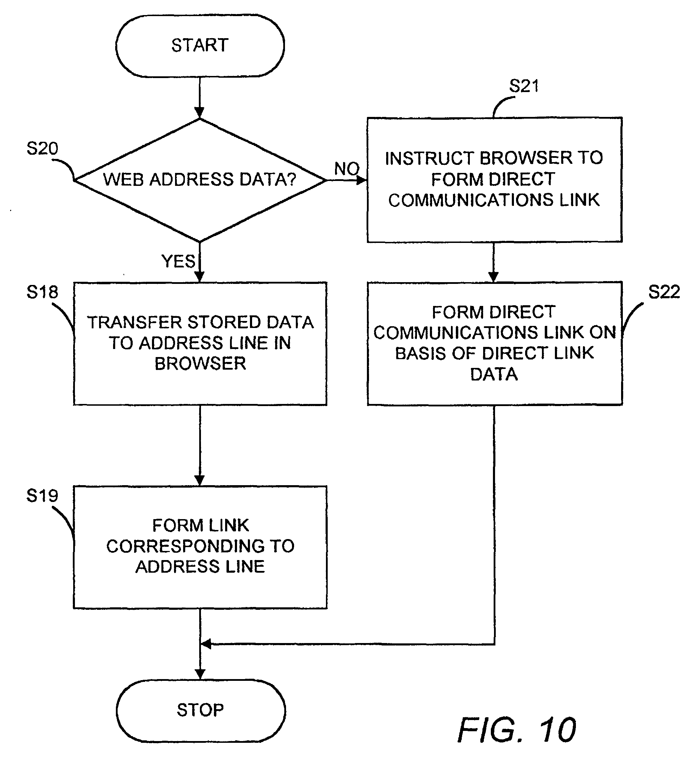

A second embodiment will now be described. In this second embodiment the apparatus is the same as has been previously described in relation to the first embodiment with the exception that the interface program 70 is modified. The present invention will now be described with reference to Figure 10 which is a flow diagram of the processing of data read from the magnetic strip 9 of a swipe card 2 after it has been transmitted and stored in the data storage portion 80 of the memory of the computer 4 in a similar manner to that described in the first embodiment.

In this embodiment of the present invention the magnetic strip 9 of the swipe card 2 is arranged to have recorded thereon data for either a web site address or a web site address and a telephone number for forming a direct communications link to a server. When data read from the swipe card 2 has been transferred to the data storage portion 80 of the memory of the computer 4 the interface module 70 is arranged to determine (s20) whether the data which has been received comprises data indicative of a web address or data indicative of a direct communications link. If the data is indicative of a web address the interface module 70 proceeds (s18,s19) as has been described in relation to the first embodiment which will not be repeated here.

If however the data stored in the data storage portion of the memory 80 is determined to be indicative of a direct communications link, the interface module 70 causes (s21) the browser program 75 to form a communications link based upon the direct communications link data stored in the data storage portion 80 of the memory. The browser (s22) then forms a direct communications link by causing the modem 13 to make a telephone connection on the basis of the direct communications link data and thereby avoid the need to form a connection to the identified web site via the Internet.

In this way if a dedicated communications link to a server exists, by providing that data on the swipe card, a user can take advantage of that direct communications link although the user does not himself know of the existence of that link.

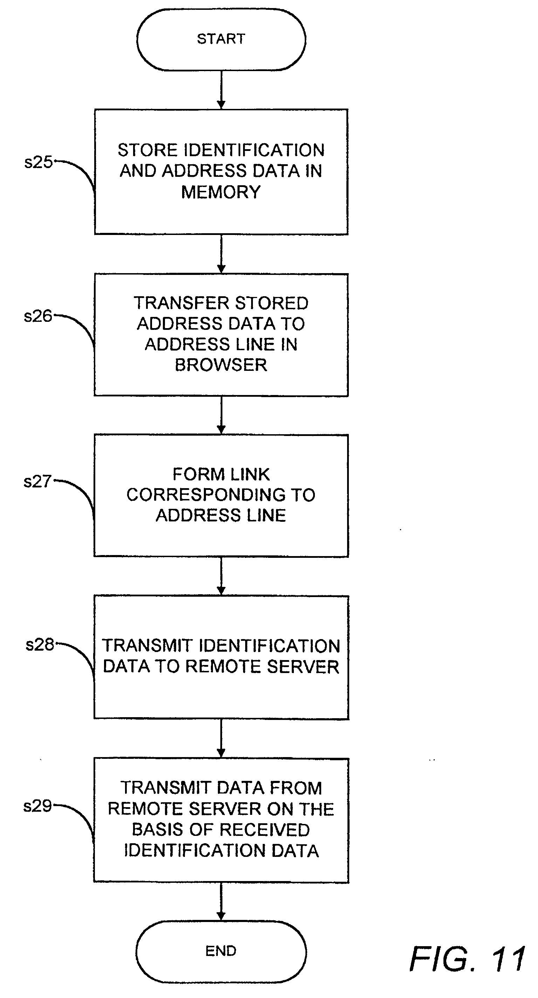

A third embodiment of the present invention will now be described. This third embodiment is the same as the first embodiment with the exception that the interface program 75 is modified. This embodiment will now be described with reference to Figure 11 which is a flow diagram of the processing of data read from the magnetic strip 9 of a swipe card 2 after it has been transmitted and stored in the data storage portion 80 of the memory of a computer 4 as has previously been described in relation to the first embodiment.

In this embodiment of the present invention the magnetic strip 9 of a swipe card 2 is arranged to have recorded thereon identification data in addition to address data.

When the data is downloaded from the data buffer 52 of the card reader 3 it is stored (s25) in the data storage portion 80 of the memory of the computer 4. The interface module 70 is then arranged to transfer (s26) only the part of the data stored in the data storage portion 80 of the memory corresponding to address data to the browser program to cause (s27) the browser program to form a communications link as has already been described in relation to the previous embodiments of the present invention.

When a communications link has been formed between the computer 4 and a remote server, the web site which is then downloaded from the remote server is arranged to include a program which causes the computer 4 to transmit (s28) to the server the additional data stored in the data storage portion 80 of the memory of the computer 11. In this way the remote server can be made aware of the identity of the card which has caused a communications link to be formed with the server. The remote server is then arranged to transmit or not to transmit (s29) further data to the computer 4 on the basis of said additional data.

Thus for example the server could be set up to restrict access to different web sites depending upon the identification data received. Alternatively, the remote server could have stored therein account data corresponding to the identification data on a card and the server could be arranged to charge for the use of a web site by updating account data associated with the received identification data, based upon monitoring the continued access of a web site through the generated communications link.

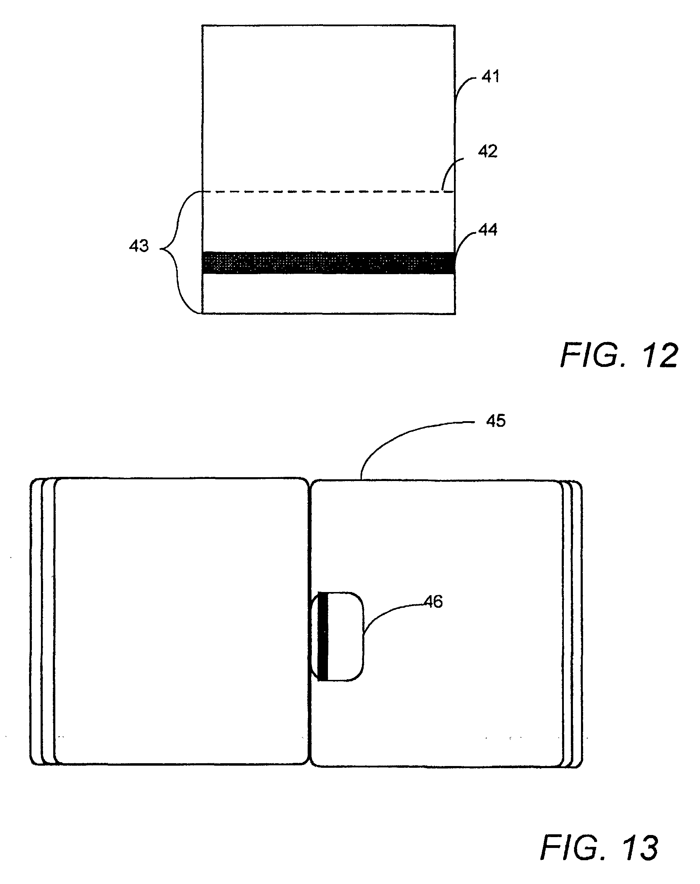

Although in the previous embodiment the present invention has been described in terms of the distribution of advertising leaflets other documents such as magazines, newspapers or other periodicals could be used to distribute swipe cards. Figure 13 is a schematic diagram of a magazine 45 in an open position having a swipe card 46 which is ready for removal from the magazine. In this example the swipe card 46 is not attached to the magazine 45 but merely rests on the upper surface of one of the pages of the magazine adjacent to the spine of the magazine. The swipe card 46 as recorded thereon address data for a web site. Printed on the page of the magazine on which the swipe card 46 rests is an advert related to the information which appears on the web site to which the address data relates. By inserting a swipe card 46 within a magazine the swipe cards in accordance with the present invention could be distributed in a similar manner to the distribution of magazines, newspapers or other periodicals. When the swipe card is delivered together with the magazine 45, newspaper or other periodical the swipe card 46, the swipe card is held in place between the leaves of the magazine, newspaper or other periodical by means of friction. Once the magazine, newspaper or other periodical has been delivered, the swipe card 46 can then be removed and used in the manner previously described.

Although in relation to the above embodiments the distribution of swipe cards attached to advertising leaflets by means of glue and distribution by associating documents with newspapers, magazines or other periodicals has been described alternative means of attachment and distribution could be used. Figure 12 is a schematic diagram of another document having a swipe card attached thereto. In this example the document comprises a paper substrate 41 having a row of perforations 42 defining the upper edge of a lower detachable portion 43. The lower detachable portion 43 has provided thereon a magnetic strip 44 which has address data recorded thereon. When a user receives a document having a detachable swipe card the user can separate the detachable portion 43 from the remainder of the paper substrate 41 by tearing along the perforations 42. Documents having a detachable portion to act as a swipe card could be distributed by post or any other conventional manner. Other documents such as magazines having pages with detachable portions for use as swipe cards could also be used as a way of distributing swipe cards having address data recorded thereon.

Alternatively instead of attaching or associating a swipe card with another document the swipe card itself could be distributed on its own. For example the swipe card could be printed in the manner of a business card and distributed in the same way as a business card in business meetings. In this way, by distributing business cards having magnetic strips carrying address data or data recorded in other readable form, it would be possible for business people to distribute cards directing customers to the business' web site to obtain further information about their products for example.

It will also be appreciated that instead of providing a card reader for reading data recorded on a card a document reader could be provided to read printed address data appearing directly on a portion of the document. It will be appreciated that machine readable address data recorded on a portion of a document could be read directly from the document by a reader without that portion of the document being detached from the remainder of the document.

The embodiments of the present invention enable individuals to access web sites more easily since a web address no longer needs to be manually input. The present invention may also be used to access search engines or Internet 'portals' which may themselves be used to access further web sites.

It will also be appreciated that although the present invention has been described in terms of obtaining information from web sites, the present invention could also be applied to transferring information by e-mail.

By providing swipe cards having address data corresponding to direct communications links, a means is provided to identify those dedicated connections to users and so improve the ability of users to take advantage of such links.

By providing swipe cards having identification data in addition to address data, a means is provided for servers to identify who is accessing their web site. A provider of a web site can then either restrict access to those sites to appropriate individuals or alternatively use the identification data to cause charges to be made to an account corresponding to a card and thereby charge for access to a web site.

Where charges are to be made for a web site the swipe cards could be sold and a server could merely deduct credit for access to a web site from a central account associated with the identification data on a card until the total credit on a card has been exhausted. If a user then wished to continue to access a web site the user would then be obliged to purchase a new card. If the identification number on a swipe card were to be detected or the card to be lost, an individual's loss would be limited to the amount of credit for which the card has been purchased. The present invention therefore provides a means for charging for internet access which overcomes the problems involved due to individuals reluctance to transmit credit card numbers across the internet.

Although reference has been made in the specification to the use of swipe cards having data recorded on a magnetic strip it will be appreciated that in addition to recording data on a magnetic strip on a card magneto-optical or optical methods could also be used. It will also be appreciated that any suitable type of document reader could be used such as a barcode reader or a smart card reader.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A system for transferring or requesting data via a communication network via the Internet; comprising:
at least one or more communication network addressing apparatus, said apparatus each comprising:
a computing device having a modem and at least one or more communication linking programs stored therein; and
a reader for reading data on a data carrier; and
at least one or more Internet servers having stored therein at least one or more individual address locations; and
at least one or more data carriers which are separate from said computing devices, said reading means and said server locations, said data carrier having recorded thereon data in a form readable by said reader;
Wherein each of the said communication addressing apparatus is **characterised in that** said reader contains within itself a program that interprets data as recorded on a data carrier, then activates if not already active a communication link program in said computing device to enable the transferring of data indicative of an address location to said communication link program thereby forming a communication link via the Internet to a predetermined server location utilising said data as recorded on said data carrier.

2. A system for transferring or requesting data via a communication network via the Internet according to claim 1. in that said reading means includes the means to read additional data when said additional data is recorded on said data carrier and to coordinate the transfer of said additional data to said server location after a communication link to said server location has been established.

3. A system for transferring or requesting data via a communication network via the Internet according to claim 2. in that said reading means includes the means for an Internet server location being arranged to transmit or not transmit further data following receipt of additional data transmitted to said server location.

4. A system for transferring or requesting data via a communication network via the Internet according to claim 3 in that said server is arranged to store individual account data, wherein said server is arranged to update said individual account data.

5. A system for transferring or requesting data via a communication network via the Internet according to claim 3. in that a server is arranged to store individual account data, wherein said server is arranged to update said individual account data by monitoring the continued access to a remote location linked through said generated communication link to said individual account at said server.

6. A system for transferring or requesting data via a communication network via the Internet according to claims 4 and 5 in that the data as recorded on a data carrier predetermines the actions of said reader when forming a communication link via the Internet utilising said data as recorded on said data carrier.

7. A system for transferring or requesting data via a communication network via the Internet according to claim 6 in that said reading means further comprising the steps of determining whether server location address data also includes direct communication link data to a server location, wherein if said data also includes a direct communication link, said reading means being arranged to select then activate the correct communication path program in said computing device to enable the transfer of information to and from said server location via said communication link via a direct connection path.

8. A system for transferring data via a communication network via the Internet according to claim 3 in that said reader contains the means to select and then activate an email dispatch program in said computing device when email address data is recorded onto a data carrier and read from said data carrier by said reading means.

9. A system for transferring or requesting data via a communication network via the Internet according to claims 1 to 8 in that said computing device contains said reading means that is inseparable or built within itself.

10. A system for transferring or requesting data via a communication network via the Internet according to claim 9 in that said reading means is adapted to read one or more than one data format such as barcode data or magnetic swipe card data or smart card data when said data format is used to record data on a data carrier for use by said reader.

11. A system for transferring or requesting data via a communication network via the Internet according to claim 10 in that the substrate of said data carrier may be comprised of a plastic, paper or card.

12. A system for transferring or requesting data via a communication network via the Internet according to claim 11 in that said system for transferring data to or from a predetermined server location may utilise radio transmission in establishing a communication link to said server location.

## Patentansprüche

1. Ein System zur Übertragung oder Abfrage von Daten über ein Fernmeldenetz über das Internet, bestehend aus:
zumindest einem oder mehr Fernmeldenetz-Adressiergeräten, wobei jedes der besagten Adressiergeräte folgendes umfaßt:
eine Recheneinrichtung mit einem Modem und mindestens einem oder mehr darin gespeicherten Datenübertragungs-Verknüpfungsprogrammen und
ein Lesegerät zum Lesen von Daten auf einem Datenträger, und
zumindest ein oder mehr Internet-Dienstprogramme mit mindestens einer oder mehr darin gespeicherten Einzeladressen, und
zumindest einen oder mehr von der besagten Recheneinrichtung, der besagten Leseeinrichtung und den besagten Dienstprogrammadressen getrennten Datenträgern, wobei auf dem besagten Datenträger Daten in einer durch das besagte Lesegerät lesbaren Form aufgezeichnet sind,
worin jedes der besagten Datenübertragungs-Adressiergeräte **dadurch gekennzeichnet ist, daß** das besagte Lesegerät in sich ein Programm enthält, das Daten in der auf einem Datenträger aufgezeichneten Form interpretiert und sodann ein Datenübertragungs-Verknüpfungsprogramm in der besagten Recheneinrichtung aktiviert, falls es nicht bereits läuft, um die Übertragung von auf eine Adresse hindeutenden Daten zu dem besagten Datenübertragungs-Verknüpfungsprogramm zu ermöglichen, wodurch unter Benutzung der besagten, auf dem besagten Datenträger aufgezeichneten Daten eine Datenübertragungsstrecke über das Internet zu einer vorherbestimmten Dienstprogrammadresse gebildet wird.

2. Ein System zur Übertragung oder Abfrage von Daten über ein Femmeldenetz über das Internet nach Anspruch 1, in dem die besagte Leseeinrichtung das Hilfsmittel zum Lesen zusätzlicher Daten, wenn die besagten zusätzlichen Daten auf dem besagten Datenträger aufgezeichnet sind, und zum Übertragen der besagten zusätzlichen Daten zu der besagten Dienstprogrammadresse nach dem Aufbau einer Datenübertragungsstrecke zu der besagten Dienstprogrammadresse einbezieht.

3. Ein System zur Übertragung oder Abfrage von Daten über ein Fernmeldenetz über das Internet nach Anspruch 2, in dem die besagte Leseeinrichtung das Hilfsmittel für eine Internet-Dienstprogrammadresse einbezieht, die angeordnet ist, um nach dem Empfang von zusätzlichen, zu der besagten Dienstprogrammadresse übertragenen Daten weitere Daten zu übertragen oder nicht zu übertragen.

4. Ein System zur Übertragung oder Abfrage von Daten über ein Fernmeldenetz über das Internet nach Anspruch 3, in dem das besagte Dienstprogramm angeordnet ist, um Einzelkontodaten zu speichern, und worin das besagte Dienstprogramm angeordnet ist, um die besagten Einzelkontodaten zu aktualisieren.

5. Ein System zur Übertragung oder Abfrage von Daten über ein Fernmeldenetz über das Internet nach Anspruch 3, in dem ein Dienstprogramm angeordnet ist, um Einzelkontodaten zu speichern, und worin das besagte Dienstprogramm angeordnet ist, um die besagten Einzelkontodaten durch Überwachung des fortgesetzten Zugriffs auf eine Fernadresse zu aktualisieren, die über die besagte generierte Datenübertragungsstrecke mit dem besagten Einzelkonto an dem besagten Dienstprogramm verknüpft ist.

6. Ein System zur Übertragung oder Abfrage von Daten über ein Fernmeldenetz über das Internet nach den Ansprüchen 4 und 5, in dem die auf einem Datenträger aufgezeichneten Daten die Funktionen des besagten Lesegeräts vorherbestimmen, wenn unter Benutzung der besagten, auf dem besagten Datenträger aufgezeichneten Daten eine Datenübertragungsstrecke über das Internet gebildet wird.

7. Ein System zur Übertragung oder Abfrage von Daten über ein Fernmeldenetz über das Internat nach Anspruch 6, in dem die besagte Leseeinrichtung weiterhin die Schritte der Ermittlung umfaßt, ob Dienstprogrammadreßdaten auch direkte Datenübertragungsstreckendaten zu einer Dienstprogrammadresse einbeziehen, worin ― falls die besagten Daten ebenfalls eine direkte Datenübertragungsstrecke einbeziehen - die besagte Leseeinrichtung angeordnet ist, um das richtige Übertragungswegprogramm in der besagten Recheneinrichtung auszuwählen und sodann zu aktivieren, um die Übertragung von Informationen zu und von der besagten Dienstprogrammadresse über die besagte Datenübertragungsstrecke über einen direkten Verbindungsweg zu ermöglichen.

8. Ein System zur Übertragung von Daten über ein Fernmeldenetz über das Internet nach Anspruch 3, in dem das besagte Lesegerät das Hilfsmittel zum Auswählen und sodann Aktivieren eines E-Mail-Abfertigungsprogramms in der besagten Recheneinrichtung enthält, wenn E-Mail-Adreßdaten auf einen Datenträger aufgezeichnet und durch die besagte Leseeinrichtung von dem besagten Datenträger abgelesen werden.

9. Ein System zur Übertragung oder Abfrage von Daten über ein Fernmeldenetz über das Internet nach den Ansprüchen 1 bis 8, in dem die besagte Recheneinrichtung die besagte Leseeinrichtung enthält, die untrennbar oder in sich selbst gebaut ist.

10. Ein System zur Übertragung oder Abfrage von Daten über ein Fernmeldenetz über das Internet nach Anspruch 9, in dem die besagte Leseeinrichtung angepaßt ist, um durch Strichkode oder Magnetstreifenkarte oder Chipkarte aufgezeichnete Daten zu lesen.

11. Ein System zur Übertragung oder Abfrage von Daten über ein Femmeldenetz über das Internet nach Anspruch 10, in dem das Substrat des besagten Datenträgers aus Kunststoff, Papier oder Karton bestehen kann.

12. Ein System zur Übertragung oder Abfrage von Daten über ein Femmeldenetz über das Internet nach Anspruch 11, in dem sich das besagte System zur Übertragung von Daten zu oder von einer vorherbestimmten Dienstprogrammadresse beim Aufbau einer Datenübertragungsstrecke zu der besagten Dienstprogrammadresse die Funkübertragung zunutze machen kann.

## Revendications

1. Système de transfert ou de demande de données par un réseau de communication par l'Internet, comprenant :
au moins un ou plusieurs appareils d'adressage de réseau de communication, le(s) dit(s) appareil(s) comprenant :
un dispositif informatique doté d'un modem et d'au moins un ou plusieurs programmes de liaison de communication qui y sont mémorisés; et
un lecteur permettant de lire les données sur un support de données; et
au moins un ou plusieurs serveurs Internet sur lesquels sont mémorisés au moins un ou plusieurs emplacements d'adresse séparés; et
au moins un ou plusieurs supports de données qui sont indépendants desdits dispositifs informatiques, lesdits moyens de lecture et lesdits emplacements de serveur, ledit support de données sur lequel sont enregistrées des données sous une forme lisible par ledit lecteur;
Où chacun desdits appareils d'adressage de communication se **caractérise en ce que** ledit lecteur contient à l'intérieur un programme qui interprète les données telles qu'enregistrées sur un support de données, puis actionne, s'il n'est pas déjà actif, un programme de liaison de communication dans ledit dispositif informatique pour permettre le transfert de données indiquant un emplacement d'adresse audit programme de liaison de communication, en créant ainsi une liaison de communication par l'Internet vers un emplacement prédéterminé de serveur utilisant lesdites données telles qu'enregistrées sur ledit support de données.

2. Système de transfert ou de demande de données par un réseau de communication par l'Internet selon la revendication 1 dans laquelle ledit moyen de lecture comprend le moyen de lire des données additionnelles lorsque lesdites données additionnelles sont enregistrées sur ledit support de données et de coordonner le transfert des dites données additionnelles vers ledit emplacement de serveur après l'établissement d'une liaison de communication avec ledit emplacement de serveur.

3. Système de transfert ou de demande de données par un réseau de communication par l'Internet selon la revendication 2 dans laquelle ledit moyen de lecture comprend :
le moyen de disposer un emplacement de serveur Internet de telle sorte à transmettre ou non d'autres données suite à la réception de données additionnelles transmises audit emplacement de serveur.

4. Système de transfert ou de demande de données par un réseau de communication par l'Internet selon la revendication 3 dans laquelle ledit serveur est disposé pour mémoriser les données de compte individuel, où ledit serveur est disposé pour mettre à jour lesdites données de compte individuel.

5. Système de transfert ou de demande de données par un réseau de communication par l'Internet selon la revendication 3 dans laquelle un serveur est disposé pour mémoriser les données de compte individuel où ledit serveur est disposé pour mettre à jour lesdites données de compte individuel en contrôlant l'accès continu à un emplacement éloigné relié par ladite liaison de communication réalisée avec ledit compte individuel audit serveur.

6. Système de transfert ou de demande de données par un réseau de communication par l'Internet selon les revendications 4 et 5 dans lesquelles les données telles qu'enregistrées sur un support de données prédéterminent les actions dudit lecteur lors de la création d'une liaison de communication par Internet en utilisant lesdites données telles qu'enregistrées sur ledit support de données.

7. Système de transfert ou de demande de données par un réseau de communication par l'Internet selon la revendication 6 dans laquelle ledit moyen de lecture comprend également les étapes pour déterminer si les données de l'adresse d'emplacement du serveur comprennent aussi des données de liaison directe de communication avec un emplacement de serveur, où, si lesdites données comprennent aussi une liaison de communication directe, ledit moyen de lecture étant disposé pour sélectionner, puis actionner le programme de voie de communication correct dans ledit dispositif informatique pour permettre le transfert d'informations à destination et en provenance dudit emplacement de serveur par ladite liaison de communication par une voie de connexion directe.

8. Système de transfert de données par un réseau de communication par l'Internet selon la revendication 3 dans laquelle ledit lecteur contient le moyen de sélectionner puis d'actionner un programme d'envoi par e-mail dans ledit dispositif informatique lorsque des données d'adresse e-mail sont enregistrées sur un support de données et lues à partir dudit support de données par ledit moyen de lecture.

9. Système de transfert ou de demande de données par un réseau de communication par l'Internet selon les revendications 1 à 8 dans lesquelles ledit dispositif informatique contient ledit moyen de lecture qui est inséparable ou intégré.

10. Système de transfert ou de demande de données par un réseau de communication par l'Internet selon la revendication 9 dans laquelle ledit moyen de lecture est adapté pour lire les données telles qu'enregistrées par code à barres ou sur une carte magnétique ou une carte à puce.

11. Système de transfert ou de demande de données par un réseau de communication par l'Internet selo Par barre ou sur magnétique Swipe ou Intelligent . n la revendication 10 dans laquelle le substrat dudit support de données peut être composé de plastique, papier ou carte.

12. Système de transfert ou de demande de données par un réseau de communication par l'Internet selon la revendication 11 dans laquelle ledit système de transfert de données à destination ou en provenance d'un emplacement prédéterminé de serveur peut utiliser la transmission radio pour l'établissement d'une liaison de communication avec ledit emplacement de serveur.
